# EUROPÄISCHE PATENTANMELDUNG

(11) **EP 4 831 625 A1**
(43) Veröffentlichungstag der Anmeldung: **28.10.2026**
(21) Anmeldenummer: 25172483.7
(22) Anmeldetag: 25.04.2025
(51) Int. Cl.: G01N 23/04

(54) **VERFAHREN UND SYSTEM ZUM BEREITSTELLEN EINES MESSPLANS MIT MINDESTENS EINER MESSANORDNUNG FÜR EINE RÖNTGENUNTERSUCHUNGSVORRICHTUNG**

(71) Anmelder: Carl Zeiss GOM Metrology GmbH, 38122 Braunschweig (DE)
(72) Erfinder: Branz, Lorenz, 38122 Braunschweig (DE)
(74) Vertreter: Patentanwälte Bressel und Partner mbB

(57) **Zusammenfassung**

Die Erfindung betrifft ein Verfahren zum Bereitstellen eines Messplans (20) mit mindestens einer Messanordnung (21-x) für eine Röntgenuntersuchungsvorrichtung (50), umfassend: Erhalten von dreidimensionalen Modelldaten (10) eines zu untersuchenden Werkstücks, Erhalten eines Untersuchungsplans (11), wobei der Untersuchungsplan (11) mindestens eine Messaufgabe (12-x) zum Untersuchen des Werkstücks beinhaltet, Erzeugen eines Messplans (20), wobei der Messplan (20) mindestens eine Messanordnung (21-x) der Röntgenuntersuchungsvorrichtung zum Durchführen der mindestens einen Messaufgabe (12-x) des Untersuchungsplans (11) umfasst, a) Simulieren eines in der mindestens einen Messanordnung (21-x) erzeugten Durchstrahlungsbildes des Werkstücks unter Berücksichtigung der dreidimensionalen Modelldaten (10) des zu untersuchenden Werkstücks, b) Bestimmen mindestens einer vorgegebenen Eigenschaft des simulierten Durchstrahlungsbildes, c) Optimieren des Messplans (20) durch Verändern der mindestens einen Messanordnung (21-x) und Wiederholen von a) bis c), solange bis die vorgegebene mindestens eine Eigenschaft mindestens ein vorgegebenes Optimierungskriterium (15-x) erfüllt; und Bereitstellen des optimierten Messplans (20). Die Erfindung betrifft ferner ein System (1).

## Beschreibung

Die Erfindung betrifft ein Verfahren und ein System zum Bereitstellen eines Messplans mit mindestens einer Messanordnung für eine Röntgenuntersuchungsvorrichtung.

Bei der zweidimensionalen Röntgenuntersuchung von Werkstücken (z.B. von Gussteilen) ist es erforderlich, eine optimale Messanordnung für das Erfassen und das Auswerten von Werkstückregionen zu finden. Dies erfolgt manuell durch Ausprobieren, indem das Werkstück hierzu in verschiedenen Messanordnungen in der Röntgenuntersuchungsvorrichtung angeordnet wird, ein Durchstrahlungsbild erfasst und ausgewertet wird und ausgehend hiervon die geeignetste Messanordnung gewählt wird. Die Messanordnung kann neben einer Anordnung des Werkstücks ferner auch eine Anordnung von Bestandteilen der Röntgenuntersuchungsvorrichtung umfassen. Insbesondere können die Röntgenquelle und der Röntgendetektor innerhalb der Röntgenuntersuchungsvorrichtung angeordnet werden, um eine geeignete Messanordnung zu erhalten. Neben einer geometrischen Anordnung des Werkstücks und der Bestandteile der Röntgenuntersuchungsvorrichtung ist beim Erfassen eines Durchstrahlungsbildes auch eine Konfiguration von Parametern (z.B. Leistung, Stromstärke, Beschleunigungsspannung der Röntgenquelle; Auflösung, Belichtungszeit und Verstärkungsfaktor des Röntgendetektors) der Röntgenuntersuchungsvorrichtung ein maßgeblicher Einflussfaktor.

Ist für eine spezifische Messaufgabe am Werkstück die jeweils geeignetste Messanordnung gefunden, so kann anschließend im produktionsnahen Umfeld automatisiert in dieser Messanordnung gemessen und anhand von Messplänen (Projektvorlagen/-templates) die Messung und Auswertung automatisch vorgenommen werden. Dies ist insbesondere möglich, da im produktionsnahen Umfeld in der Regel die gleiche Messaufgabe an gleichartigen Werkstücken durchgeführt werden muss (z.B. bei der Inlineprüfung in einer Produktionslinie).

C. Bellon und G.-R. Jaenisch, aRTist - Analytical RT Inspection Simulation Tool, DIR 2007 - International Symposium on Digital Industrial Radiology and Computed Tomography, 25.-27. Juni, 2007, Lyon, Frankreich und C. Bellon et al., Radiographie Simulator aRTist: Version 2, 18th World Conference on Nondestructive Testing, 16.-20. April 2012, Durban, Südafrika, beschreiben Verfahren zum Simulieren von Durchstrahlungsbildern.

Der Erfindung liegt die Aufgabe zu Grunde, ein Verfahren und ein System zum Bereitstellen eines Messplans mit mindestens einer Messanordnung für eine Röntgenuntersuchungsvorrichtung bereitzustellen.

Die Aufgabe wird erfindungsgemäß durch ein Verfahren mit den Merkmalen des Patentanspruchs 1 und ein System mit den Merkmalen des Patentanspruchs 15 gelöst. Vorteilhafte Ausgestaltungen der Erfindung ergeben sich aus den Unteransprüchen.

Insbesondere wird ein Verfahren zum Bereitstellen eines Messplans mit mindestens einer Messanordnung für eine Röntgenuntersuchungsvorrichtung zur Verfügung gestellt, umfassend:
Erhalten von dreidimensionalen Modelldaten eines zu untersuchenden Werkstücks,
Erhalten eines Untersuchungsplans, wobei der Untersuchungsplan mindestens eine Messaufgabe zum Untersuchen des Werkstücks beinhaltet,
Erzeugen eines Messplans, wobei der Messplan mindestens eine Messanordnung der Röntgenuntersuchungsvorrichtung zum Durchführen der mindestens einen Messaufgabe des Untersuchungsplans umfasst,
   a) Simulieren eines in der mindestens einen Messanordnung erzeugten Durchstrahlungsbildes des Werkstücks unter Berücksichtigung der dreidimensionalen Modelldaten des zu untersuchenden Werkstücks,
   b) Bestimmen mindestens einer vorgegebenen Eigenschaft des simulierten Durchstrahlungsbildes,
   c) Optimieren des Messplans durch Verändern der mindestens einen Messanordnung und Wiederholen von a) bis c), solange bis die vorgegebene mindestens eine Eigenschaft mindestens ein vorgegebenes Optimierungskriterium erfüllt; und
Bereitstellen des optimierten Messplans.

Ferner wird insbesondere ein System zum Bereitstellen eines Messplans mit mindestens einer Messanordnung für eine Röntgenuntersuchungsvorrichtung geschaffen, umfassend: eine Datenverarbeitungseinrichtung, wobei die Datenverarbeitungseinrichtung dazu eingerichtet ist, die folgenden Schritte auszuführen:
Erhalten von dreidimensionalen Modelldaten eines zu untersuchenden Werkstücks,
Erhalten eines Untersuchungsplans, wobei der Untersuchungsplan mindestens eine Messaufgabe zum Untersuchen des Werkstücks beinhaltet,
Erzeugen eines Messplans, wobei der Messplan mindestens eine Messanordnung der Röntgenuntersuchungsvorrichtung zum Durchführen der mindestens einen Messaufgabe des Untersuchungsplans umfasst,
   a) Simulieren eines in der mindestens einen Messanordnung erzeugten Durchstrahlungsbildes des Werkstücks unter Berücksichtigung der dreidimensionalen Modelldaten des zu untersuchenden Werkstücks,
   b) Bestimmen mindestens einer vorgegebenen Eigenschaft des simulierten Durchstrahlungsbildes,
   c) Optimieren des Messplans durch Verändern der mindestens einen Messanordnung und Wiederholen von a) bis c), solange bis die vorgegebene mindestens eine Eigenschaft mindestens ein vorgegebenes Optimierungskriterium erfüllt; und
Bereitstellen des optimierten Messplans.

Das Verfahren und das System ermöglichen es, automatisiert eine für eine Messaufgabe optimale Messanordnung zu finden. Ein Grundgedanke ist hierbei, zu einer Messanordnung, welche zur Durchführung einer Messaufgabe gewählt wird, ein Durchstrahlungsbild zu simulieren. Es wird mindestens eine vorgegebene Eigenschaft des simulierten Durchstrahlungsbildes bestimmt. Basierend auf dieser bestimmten Eigenschaft wird anschließend eine Optimierung gemäß mindestens einem vorgegebenen Optimierungskriterium durchgeführt, wobei dies (iterativ) durch Verändern der Messanordnung für die Messaufgabe und erneute Simulation und Auswerten von Durchstrahlungsbildern erfolgt.

Das Verfahren kann insbesondere auch als computerimplementiertes Verfahren durchgeführt und/oder bereitgestellt werden. Es werden ferner insbesondere auch ein Computerprogrammprodukt geschaffen, umfassend Befehle, die bei der Ausführung des Computerprogrammprodukts durch einen Computer diesen veranlassen, die Verfahrensschritte des in dieser Offenbarung beschriebenen Verfahrens auszuführen. Zudem wird insbesondere ein computerlesbares Speichermedium geschaffen, umfassend Befehle, die bei der Ausführung durch einen Computer diesen veranlassen, die Verfahrensschritte des in dieser Offenbarung beschriebenen Verfahrens auszuführen.

Eine Röntgenuntersuchungsvorrichtung ist insbesondere eine Röntgenuntersuchungsvorrichtung aus der industriellen Messtechnik. Die Röntgenuntersuchungsvorrichtung umfasst insbesondere eine Röntgenquelle und einen Röntgendetektor. Ferner umfasst die Röntgenuntersuchungsvorrichtung geeignete Mittel, um das Werkstück in einer vorgegebenen Position anzuordnen und/oder in einer vorgegebenen Orientierung auszurichten (z.B. eine Halterung und/oder eine Aktorik). Insbesondere kann vorgesehen sein, dass die Abstände Röntgenquelle zu Werkstück und Werkstück zu Röntgendetektor einstellbar sind. Ferner kann innerhalb der Röntgenuntersuchungsvorrichtung eine Position und/oder eine Ausrichtung der Röntgenquelle und/oder des Röntgendetektors innerhalb von möglichen Betriebsparametern frei gewählt werden. Beispielsweise können Röntgenquelle und Röntgendetektor an Roboterarmen oder anderen Kinematiken befestigt sein. Hierbei ist jedoch stets sicherzustellen, dass die in der Röntgenquelle erzeugte Röntgenstrahlung zumindest teilweise durch das Werkstück (Messobjekt) auf mindestens einen Teil des Röntgendetektors ausgerichtet ist. Die Röntgenuntersuchungsvorrichtung kann beispielsweise einen Drehtisch aufweisen, auf dem das Werkstück angeordnet werden kann. Ferner kann die Röntgenuntersuchungsvorrichtung alternativ oder zusätzlich eine Aktorik aufweisen, die das Werkstück anordnen und/oder ausrichten kann, beispielsweise einen (mehrachsigen) Roboterarm. Die Röntgenuntersuchungsvorrichtung kann insbesondere auch eine Werkstückaufnahme und/oder Halterung für das Werkstück aufweisen. Eigenschaften der Röntgenuntersuchungsvorrichtung, welche insbesondere als Teil der jeweiligen Messanordnung berücksichtigt werden, beinhalten insbesondere Betriebsparameter der Röntgenuntersuchungsvorrichtung (z.B. eine Beschleunigungsspannung der Röntgenquelle und/oder eine Belichtungszeit des Röntgendetektors) und/oder Eigenschaften und/oder Beschränkungen bezüglich von Freiheitsgraden der Röntgenuntersuchungsvorrichtung.

Es ist vorgesehen, dass dreidimensionale Modelldaten (z.B. Computer Aided Design-(CAD)-Daten) eines zu untersuchenden Werkstücks erhalten werden. Ferner können die dreidimensionalen Modelldaten auch Modelldaten von der Röntgenquelle, dem Röntgendetektor und einer Halterung des Werkstücks umfassen. Die dreidimensionalen Modelldaten umfassen insbesondere eine geometrische Beschreibung des Werkstücks sowie zugehöriger Materialparameter. Ferner umfassen die dreidimensionalen Modelldaten insbesondere eine geometrische Beschreibung der Halterung sowie zugehöriger Materialparameter. Ferner wird ein Untersuchungsplan erhalten, wobei der Untersuchungsplan mindestens eine Messaufgabe zum Untersuchen des Werkstücks beinhaltet. Der Untersuchungsplan kann auch als Inspektionsplan bezeichnet werden und umfasst insbesondere eine Beschreibung darüber, welche Regionen des Werkstücks (Interessensregion), beispielsweise mit Bezug auf die dreidimensionalen Modelldaten, mittels Röntgenstrahlung untersucht werden sollen und daher mittels der Röntgenuntersuchungsvorrichtung erfasst werden müssen.

Es wird ein Messplan erzeugt, wobei der Messplan mindestens eine Messanordnung der Röntgenuntersuchungsvorrichtung zum Durchführen der mindestens einen Messaufgabe des Untersuchungsplans umfasst. Der Messplan umfasst in Form der mindestens einen Messanordnung insbesondere eine Beschreibung bzw. Steuerdaten für das Durchführen der mindestens einen Messaufgabe. Erzeugt wird hierbei insbesondere ein initialer, das heißt, noch nicht optimierter Messplan. Im einfachsten Fall kann hierbei vorgesehen sein, dass zu jeder Messaufgabe irgendeine Messanordnung gewählt wird, mit der die Messaufgabe durchgeführt werden kann. Hierbei werden insbesondere Eigenschaften der Röntgenuntersuchungsvorrichtung als Teil der jeweiligen Messanordnung berücksichtigt.

Insbesondere können diese Eigenschaften Freiheitsgrade der Röntgenuntersuchungsvorrichtung betreffen, beispielsweise Bewegungsfreiheitsgrade einer Röntgenquelle, einer Halterung für das Werkstück und/oder eines Röntgendetektors. Teilweise können diese Freiheitsgrade zusätzlich voneinander abhängig sein (z.B. strahlt die Röntgenquelle immer in Richtung des Röntgendetektors). Die (noch nicht optimierte, initiale) Messanordnung (geometrische Positionen/Orientierungen und die (Betriebs-)Parameter) kann insbesondere mit Hilfe von Heuristiken anhand der Geometrie des Werkstücks bestimmt werden.

Eine Messanordnung umfasst hierbei insbesondere eine Beschreibung einer Anordnung aus Röntgenquelle, Werkstück (Messobjekt) und Röntgendetektor während des jeweiligen Erfassens eines Durchstrahlungsbildes (während einer Messung). Insbesondere umfasst die Messanordnung hierbei Positionen und/oder Ausrichtungen (Posen) der Röntgenquelle und des Röntgendetektors sowie des Werkstücks. Die Messanordnung umfasst ferner insbesondere Eigenschaften der Röntgenuntersuchungsvorrichtung, insbesondere Informationen zu (Betriebs-)Parametern der Röntgenquelle (insbesondere eine Stromstärke und eine Beschleunigungsspannung) und (Betriebs-)Parametern des Röntgendetektors (insbesondere eine Belichtungszeit, eine Verstärkung etc.).

Es wird in a) ein in der mindestens einen Messanordnung erzeugtes Durchstrahlungsbild des Werkstücks unter Berücksichtigung der dreidimensionalen Modelldaten des zu untersuchenden Werkstücks simuliert. Dies erfolgt mittels an sich bekannter Verfahren. Beispielsweise können die in C. Bellon und G.-R. Jaenisch, aRTist - Analytical RT Inspection Simulation Tool, DIR 2007 - International Symposium on Digital Industrial Radiology and Computed Tomography, 25.-27. Juni, 2007, Lyon, Frankreich und C. Bellon et al., Radiographie Simulator aRTist: Version 2, 18th World Conference on Nondestructive Testing, 16.-20. April 2012, Durban, Südafrika, beschriebenen Verfahren hierzu verwendet werden. Hierbei können insbesondere auch Störeffekte berücksichtigt werden, wie beispielsweise das Auftreten von Streustrahlung und/oder einer Strahlaufhärtung. Insbesondere wird hierzu basierend auf den dreidimensionalen Modelldaten ein dreidimensionales (Objekt-)Volumen erzeugt, in dem Volumenelementen (Voxeln) jeweils zumindest ein Materialparameter zugeordnet ist. Ausgehend von dem dreidimensionalen Volumen wird insbesondere eine Strahlabschwächung beim Durchtritt durch das Volumen hindurch in Abhängigkeit von der jeweils beim Durchtritt (voxelweise) passierten Materialeigenschaften berechnet und auf eine Fläche eines Röntgendetektors abgebildet. Ein jeweils für einzelne zweidimensionale Positionen einer Detektorfläche erhaltener Wert für die (abgeschwächte) Intensität der Röntgenquelle ergibt dann das simulierte Durchstrahlungsbild. Die Eigenschaften der Röntgenuntersuchungsvorrichtung, welche insbesondere als Teil der jeweiligen Messanordnung berücksichtigt werden, sind hierbei insbesondere Eigenschaften bzw. Betriebsparameter der Röntgenquelle (z.B. eine Beschleunigungsspannung, ein Röntgenspektrum usw.) und Eigenschaften des Röntgendetektors (z.B. eine Größe, eine Anzahl und/oder Größe von Bildelementen, eine Empfindlichkeit, eine Belichtungszeit usw.).

Ein weiteres Beispiel für Betriebsparameter der Röntgenquelle kann eine Art einer Filterung der Röntgenstrahlung betreffen, beispielsweise eine (automatische) Auswahl von Filterplättchen, die direkt nach der Röntgenquelle die Röntgenstrahlung filtern, um beispielsweise einen Anteil an niedrigenergetischer Strahlung zu reduzieren (d.h. das Röntgenspektrum hierdurch aufzuhärten).

Ein weiteres Beispiel für Betriebsparameter kann einen aktuellen Zustand der Röntgenquelle (z.B. führt eine Abnutzung/Alterung der Röntgenquelle zu einer Veränderung des Strahlungsspektrums und der Intensität) und/oder des Röntgendetektors (Abnutzung/Alterung) betreffen. Es kann hierbei vorgesehen sein, mittels einer Trendextrapolation und/oder einer Sicherheitsmarge bereits einen zukünftigen Zustand der Röntgenquelle und/oder des Röntgendetektors zu berücksichtigen. Hierdurch kann eine Art zeitlicher "Puffer" geschaffen werden, der es ermöglicht, den Messplan für eine vorgegebene Nutzungsdauer zu nutzen, auch wenn die Komponenten über die vorgegebene Nutzungsdauer hinweg verschleißen.

In b) wird mindestens eine vorgegebene Eigenschaft des simulierten Durchstrahlungsbildes bestimmt. Die mindestens eine Eigenschaft wird hierbei insbesondere von der jeweiligen Messaufgabe vorgegeben. Mit anderen Worten: Die jeweilige Messaufgabe gibt insbesondere vor, welche (mindestens eine) Eigenschaft an dem simulierten Durchstrahlungsbild bestimmt wird. Die vorgegebene mindestens eine Eigenschaft dient hierbei insbesondere als Metrik für eine Bewertung der jeweils gewählten Messanordnung. Als Eigenschaft kann beispielsweise ein Signal-zu-Rauschverhältnis (engl. Signal-to-Noise-Ratio, SNR) und/oder ein absoluter Bildkontrast vorgegeben sein.

In c) wird der Messplan durch Verändern der mindestens einen Messanordnung und Wiederholen von a) bis c) optimiert. Dies erfolgt solange, bis die vorgegebene mindestens eine Eigenschaft mindestens ein vorgegebenes Optimierungskriterium erfüllt. Insbesondere können im Rahmen des Veränderns der mindestens einen Messanordnung jeweils Messpositionen und/oder Messausrichtungen und/oder Projektionsrichtungen der Röntgenquelle, des Werkstücks (Messobjekt) und/oder des Röntgendetektors beim Erfassen (bzw. bei der Simulation) des jeweiligen Durchstrahlungsbildes verändert werden. Ferner können auch die (Betriebs-)Parameter der Röntgenuntersuchungsvorrichtung verändert werden (z.B. eine Beschleunigungsspannung und/oder eine Belichtungszeit). Nach dem Verändern wird für die jeweilige Messaufgabe erneut ein Durchstrahlungsbild unter Berücksichtigung der geänderten Messanordnung simuliert und in der voranstehend beschriebenen Weise ausgewertet. Dies erfolgt solange, bis das mindestens eine Optimierungskriterium, welches insbesondere mit Bezug auf die vorgegebene mindestens eine Eigenschaft vorgegeben ist, erfüllt ist. Das mindestens eine Optimierungskriterium kann beispielsweise als Teil der Messaufgabe vorgegeben werden. Für das Optimieren kann beispielsweise das Gradient-Descent-Verfahren verwendet werden, welches für jeden Parameter (der als Teil der Messanordnung verändert werden kann) einen lokal optimalen Optimierungsschritt nutzt, um insbesondere gegen ein lokales Optimum (der mindestens einen Eigenschaft) zu konvergieren.

Der derart optimierte Messplan wird bereitgestellt. Der optimierte Messplan umfasst insbesondere eine Liste von Messanordnungen. Die Messanordnungen sind insbesondere in einer Reihenfolge geordnet. Der optimierte Messplan kann anschließend automatisiert durchgeführt werden. Insbesondere wird der optimierte Messplan anschließend in einen Speicher einer Röntgenuntersuchungsvorrichtung geladen. Hierdurch wird insbesondere auch ein Verfahren zum Untersuchen eines Werkstücks mittels einer Röntgenuntersuchungsvorrichtung zur Verfügung gestellt. Die beim Durchführen des optimierten Messplans erfassten Durchstrahlungsbilder können anschließend zum Überprüfen des Werkstücks ausgewertet werden.

Beim Erzeugen des Messplans wird insbesondere zu jeder Zeit darauf geachtet, dass Kollisionen zwischen dem Werkstück, einer Halterung des Werkstücks, einer Röntgenquelle, einem Röntgendetektor und gegebenenfalls weiteren Komponenten der Röntgenuntersuchungsvorrichtung, wie beispielsweise einer Kabine, vermieden werden. Hierbei werden insbesondere Geometrieinformationen von Werkstück, Halterung und Komponenten der Röntgenuntersuchungsvorrichtung zur Kollisionsvermeidung verwendet und insbesondere bei einer jeweiligen Bahnplanung zum Verändern der Messanordnung berücksichtigt. Hierzu können beispielsweise CAD-Daten des Werkstücks, der Halterung und der Komponenten genutzt werden.

Jeder Messanordnung in dem Messplan kann eine Rüstzeit zugeordnet sein, welche insbesondere eine Zeit bezeichnet, die benötigt wird, um die Röntgenuntersuchungsvorrichtung in die jeweilige Messanordnung zu bringen. Die Rüstzeit umfasst insbesondere eine Verfahrzeit, insbesondere des Werkstücks (und der Halterung) sowie der Röntgenquelle und des Röntgendetektors. Ferner kann auch eine Ausschwingzeit berücksichtigt werden, das heißt, eine Zeit, die die Röntgenuntersuchungsvorrichtung jeweils benötigt, um nach dem Verfahren (vollständig) ausgeschwungen zu sein. Es kann vorgesehen sein, dass die Rüstzeit beim Optimieren berücksichtigt wird.

Teile des Systems, insbesondere die Datenverarbeitungseinrichtung, können einzeln oder zusammengefasst als eine Kombination von Hardware und Software ausgebildet sein, beispielsweise als Programmcode, der auf einer Recheneinrichtung, insbesondere einem Mikrocontroller oder Mikroprozessor, ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) und/oder Graphikprozessor (GPU) und/oder Digitaler Signalprozessor (DSP) ausgebildet sind. Die Datenverarbeitungseinrichtung kann insbesondere mindestens eine Recheneinrichtung und mindestens einen Speicher umfassen.

In einer Ausführungsform ist vorgesehen, dass der Messplan zu jeder Messanordnung Messparameter aufweist, wobei die Messparameter Betriebsparameter der Röntgenuntersuchungsvorrichtung umfassen und wobei die Messparameter in c) zum Optimieren verändert werden. Hierdurch können auch Messparameter der Röntgenuntersuchungsvorrichtung in die Optimierung mit einbezogen werden. Hierdurch kann der Messplan sowohl in Bezug auf die jeweilige Messanordnung als auch in Bezug auf die jeweils zugehörigen Betriebsparameter optimiert werden. Beispielsweise können dies Betriebsparameter der Röntgenquelle (z.B. eine Beschleunigungsspannung) und/oder des Röntgendetektors (z.B. eine Belichtungszeit) sein.

In einer Ausführungsform ist vorgesehen, dass das Erzeugen des (insbesondere initialen) Messplans mittels eines trainierten Maschinenlernverfahrens erfolgt. Hierdurch kann eine Optimierungszeit verringert werden, da das trainierte Maschinenlernverfahren insbesondere bereits einen Messplan mit Messanordnungen erzeugen kann, die bereits in der Nähe eines jeweiligen Optimums liegen. Hierzu kann insbesondere vorgesehen sein, dass ausgehend von den dreidimensionalen Modelldaten ein dreidimensionales Objektvolumen des Werkstücks erzeugt wird und das dreidimensionale Objektvolumen dem trainierten Maschinenlernmodell zusammen mit der jeweiligen Messaufgabe als Eingangsdaten zugeführt wird. Das dreidimensionale Objektvolumen umfasst insbesondere eine Beschreibung von volumetrischen Regionen (z.B. in Form von Voxeln), welche innerhalb und außerhalb des Werkstücks liegen, jeweils mit zugehörigen Materialeigenschaften (Materialparametern). Insbesondere ist basierend auf der Messaufgabe innerhalb des dreidimensionalen Objektvolumens eine Interessensregion markiert, das heißt, eine Region, die gemäß Messaufgabe untersucht werden soll. Das trainierte Maschinenlernmodell ermittelt ausgehend von diesen Eingangsdaten als Ausgangsdaten eine Messanordnung (z.B. eine Messposition, eine Messausrichtung und/oder eine Projektionsrichtung usw.), um die Interessensregion mittels der Röntgenuntersuchungsvorrichtung zu erfassen. Das Maschinenlernmodell wurde in einer Trainingsphase mittels eines Trainingsdatensatzes in an sich bekannter Weise trainiert, beispielsweise im Wege des überwachten Lernens. Der Trainingsdatensatz umfasst insbesondere Trainingsdaten, welche jeweils Datenpaare umfassen, in denen jeweils die vorgenannten Eingangsdaten für verschiedene Werkstücke und/oder verschiedene Messaufgaben gepaart mit einer jeweiligen Messanordnung enthalten sind. Die Messanordnung für gegebene Eingangsdaten wird hierbei beispielsweise durch Experten manuell vorgegeben und/oder anhand von gesammelten Daten aus der industriellen Praxis abgeleitet. Das Maschinenlernmodell kann beispielsweise ein (tiefes) Neuronales Netz sein oder ein solches umfassen.

In einer Ausführungsform ist vorgesehen, dass das simulierte Durchstrahlungsbild mittels mindestens einer Filterfunktion gefiltert wird, wobei die vorgegebene mindestens eine Eigenschaft ausgehend von dem gefilterten Durchstrahlungsbild bestimmt wird. Hierdurch kann das simulierte Durchstrahlungsbild insbesondere gezielt auf Eigenschaften hin ausgewertet werden. Die Filterfunktion ist insbesondere eine graphische Filterfunktion, welche eine Bildbearbeitung an dem Durchstrahlungsbild durchführt. Beispielsweise können graphische Merkmale mittels der mindestens einen Filterfunktion herausgearbeitet werden. Beispielsweise kann die mindestens eine Filterfunktion ein Kantenfilter (Kantenoperator) bzw. ein Filter zur Kantendetektion umfassen, mittels dessen im simulierten Durchstrahlungsbild enthaltene Kanten verstärkt werden können. Es kann vorgesehen sein, dass die mindestens eine Filterfunktion auch beim Auswerten eines nachfolgend erfassten Durchstrahlungsbildes angewendet wird.

In einer Ausführungsform ist vorgesehen, dass das mindestens eine Optimierungskriterium eine Maximierung eines Kontrastverhältnisses umfasst. Durch das Optimieren des Kontrastverhältnisses können bei einer nachfolgenden Auswertung eines zugehörig in der jeweiligen Messanordnung erfassten Durchstrahlungsbildes insbesondere Abmessungen des Werkstücks optimal bestimmt werden, da ein Kontrastverhältnis das Erkennen von Bereichen, die zum Werkstück gehören und umgebenden Bereichen, die nicht zum Werkstück gehören (insbesondere Luft), erleichtert. Die zugehörige Eigenschaft des simulierten Durchstrahlungsbildes ist insbesondere ein Kontrastverhältnis, insbesondere in einer im Rahmen der jeweiligen Messaufgabe vorgegebenen Interessensregion.

In einer Ausführungsform ist vorgesehen, dass das mindestens eine Optimierungskriterium eine Maximierung eines Signal-zu-Rausch-Verhältnisses umfasst. Hierdurch kann eine Signalstärke im Vergleich zu einem Rauschen erhöht werden, was bei einem nachfolgend erfassten Durchstrahlungsbild eine Auswertung erleichtert. Insbesondere ist für das Auswerten von kleinen Strukturen im Werkstück ein geeignetes Signal-zu-Rausch-Verhältnis notwendig, z.B. bei einer Porösitätsanalyse. Die zugehörige Eigenschaft des simulierten Durchstrahlungsbildes ist insbesondere ein Signal-zu-Rauschverhältnis.

In einer Ausführungsform ist vorgesehen, dass das mindestens eine Optimierungskriterium eine Vorgabe für ein Histogramm des simulierten Durchstrahlungsbildes umfasst. Hierdurch kann eine Verteilung von Intensitätswerten optimiert werden. Beispielsweise kann vorgesehen sein, zum Erhöhen eines Kontrastes die Vorgabe zu machen, dass das Histogramm nur in den Randbereichen Werte aufweisen darf. Die zugehörige Eigenschaft des simulierten Durchstrahlungsbildes ist insbesondere ein Histogramm (der Intensitätswerte).

In einer Ausführungsform ist vorgesehen, dass zusätzlich mindestens eine Vorgabe in Bezug auf eine Durchstrahlungslänge berücksichtigt wird. Hierdurch kann beispielsweise eine maximale Durchstrahlungslänge vorgegeben werden, welche nicht überschritten werden darf. Entsprechend kann die Messanordnung dann derart verändert werden, dass die vorgegebene maximale Durchstrahlungslänge nicht überschritten wird. Insbesondere kann hierdurch auch ein Signal-zu-Rausch-Verhältnis verbessert werden.

Dies kann beispielsweise durch Berücksichtigung eines volumetrischen Objektvolumens, das aus den dreidimensionalen Modelldaten des zu untersuchenden Werkstücks erzeugt wurde, erfolgen, wobei hierzu anhand einer zu beurteilenden Messanordnung eine jeweilige Durchstrahlungslänge von linear gedachter Röntgenstrahlung durch das Werkstück hindurch bestimmt wird. Eine Durchstrahlungslänge ist hierbei insbesondere eine effektive Durchstrahlungslänge, bei der eine jeweilige Materialeigenschaft, insbesondere eine Materialeigenschaft, die mit einer Abschwächung von Röntgenstrahlung einhergeht (Absorptionskoeffizient), berücksichtigt wird.

In einer weiterbildenden Ausführungsform ist vorgesehen, dass die Vorgabe einen vorgegebenen Bereich, in dem die Durchstrahlungslängen liegen müssen, beinhaltet. Hierdurch kann insbesondere eine Signalstärke erreicht werden, die in einem vorgegebenen Bereich liegt. Dies ermöglicht es insbesondere, einen Interessensbereich im Werkstück im Hinblick auf eine Signalqualität in einem erfassten Durchstrahlungsbild optimal zu durchstrahlen. Beispielsweise kann vorgesehen sein, zumindest für den Interessensbereich Werte der Durchstrahlungslängen in dem vorgegebenen Bereich anzustreben. Die Durchstrahlungslänge kann hierbei insbesondere auch indirekt über ein jeweiliges Detektorsignal (z.B. Anzahl Counts) repräsentiert werden.

In einer Ausführungsform ist vorgesehen, dass zusätzlich eine Anzahl von Messanordnungen des Messplans zum Durchführen der mindestens einen Messaufgabe minimiert wird. Hierdurch kann eine benötigte Zeit zum Durchführen des Messplans verringert werden. Beispielsweise kann vorgesehen sein, mehrere Interessensregionen und/oder mehrere Messaufgaben gemeinsam in einer Messanordnung zusammenzufassen, wenn ein gemeinsames Erfassen der mehreren Interessensregionen und/oder ein gemeinsames Durchführen der mehreren Messaufgaben möglich ist.

In einer Ausführungsform ist vorgesehen, dass zusätzlich eine Reihenfolge der Messanordnungen des Messplans derart gewählt und/oder verändert wird, dass eine benötigte Zeit zum Durchführen des Messplans minimiert ist oder minimiert wird. Hierdurch kann eine benötigte Zeit insgesamt verringert werden. Dies erlaubt kürzere Taktzeiten und somit einen größeren Durchsatz. Dies ist insbesondere im Bereich der industriellen Anwendung, insbesondere bei der Werkstücküberprüfung in einer Produktionslinie, von Vorteil. Die benötigte Zeit setzt sich hierbei insbesondere aus einer Messzeit und einer Verfahrzeit zusammen. Die Messzeit umfasst hierbei das Erfassen eines Durchstrahlungsbildes in einer Messanordnung. Die Verfahrzeit umfasst hierbei die Zeit, die benötigt wird, um von einer Messanordnung in die nächste Messanordnung zu wechseln, insbesondere indem eine Position und/oder Orientierung des Werkstücks und/oder der Röntgenquelle und/oder des Röntgendetektors geändert wird. Indem beispielsweise hinsichtlich der Positionen und/oder Orientierungen benachbarte Messanordnungen direkt nacheinander ausgeführt werden, kann eine Verfahrzeit verringert, insbesondere minimiert werden, was zu einer Reduktion der benötigten Zeit zum Durchführen des Messplans beiträgt. Es ist bei dieser Ausführungsform insbesondere auch möglich, dass mit dem Ziel, eine Gesamtmesszeit zu reduzieren, für manche Messanordnungen nur die zweitbeste (oder eine noch schlechtere, aber ausreichende) Variante gewählt wird, wenn beispielsweise eine längere benötigte Belichtungszeit des Röntgendetektors durch eine Reduktion der Verfahrzeit bzw. Rüstzeit überkompensiert wird usw.

In einer Ausführungsform ist vorgesehen, dass mehrere Optimierungskriterien vorgesehen sind, wobei das Optimieren anhand einer gewichteten Summe der mehreren Optimierungskriterien erfolgt. Hierdurch kann mehr als ein Optimierungskriterium berücksichtigt werden. Gewichtungsfaktoren der einzelnen Optimierungskriterien können beispielsweise empirisch bestimmt werden und/oder ausgehend von Präferenzen eines Nutzers gewählt werden. Beispielsweise kann vorgesehen sein, ein Signal-zu-Rausch-Verhältnis und ein Kontrastverhältnis als Optimierungskriterien zu berücksichtigen.

In einer Ausführungsform ist vorgesehen, dass um das Werkstück herum ein Hüllvolumen festgelegt wird, wobei das Hüllvolumen beim Erzeugen und Optimieren des Messplans berücksichtigt wird. Hierdurch kann verhindert werden, dass das Werkstück, das beispielsweise mittels einer robotischen Aktorik in der Röntgenuntersuchungsvorrichtung angeordnet wird, mit Randbereichen der Röntgenuntersuchungsvorrichtung (z.B. einer Röntgenquelle, einem Röntgendetektor usw.) kollidiert. Das Hüllvolumen kann beispielsweise auch beim Erzeugen und/oder Optimieren der jeweiligen Messanordnung berücksichtigt werden. Insbesondere dient das Hüllvolumen einer Kollisionsvermeidung, wobei als Randbedingung insbesondere vorgesehen ist, dass das Hüllvolumen beim Erzeugen und Optimieren der Messanordnung keinen Überlapp und/oder Kontakt mit einer Kontur bzw. einem jeweiligen Hüllvolumen der Röntgenquelle und des Röntgendetektors sowie gegebenenfalls weiterer Komponenten haben darf.

In einer Ausführungsform ist vorgesehen, dass eine zum Halten des Werkstücks eingesetzte Werkstückaufnahme und/oder Halterung berücksichtigt wird. Hierdurch können insbesondere durch die Werkstückaufnahme und/oder die Halterung hervorgerufene Artefakte (z.B. Streustrahlung, Abschattung usw.) beim Simulieren des Durchstrahlungsbildes mit berücksichtigt werden. In der Folge werden die Werkstückaufnahme und/oder die Halterung bzw. die hierdurch hervorgerufenen Effekte auch beim Optimieren berücksichtigt. Für die Werkstückaufnahme und/oder die Halterung können beispielsweise ebenfalls dreidimensionale Modelldaten erhalten werden und beim Erzeugen des Messplans und beim Simulieren des Durchstrahlungsbildes berücksichtigt werden.

Weitere Merkmale zur Ausgestaltung des Systems ergeben sich aus der Beschreibung von Ausgestaltungen des Verfahrens. Die Vorteile des Systems sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Systems zum Bereitstellen eines Messplans mit mindestens einer Messanordnung für eine Röntgenuntersuchungsvorrichtung;
- Fig. 2: ein schematisches Ablaufdiagramm von Ausführungsformen des Verfahrens;
- Fig. 3: eine schematische Darstellung zur Verdeutlichung einer Ausführungsform.

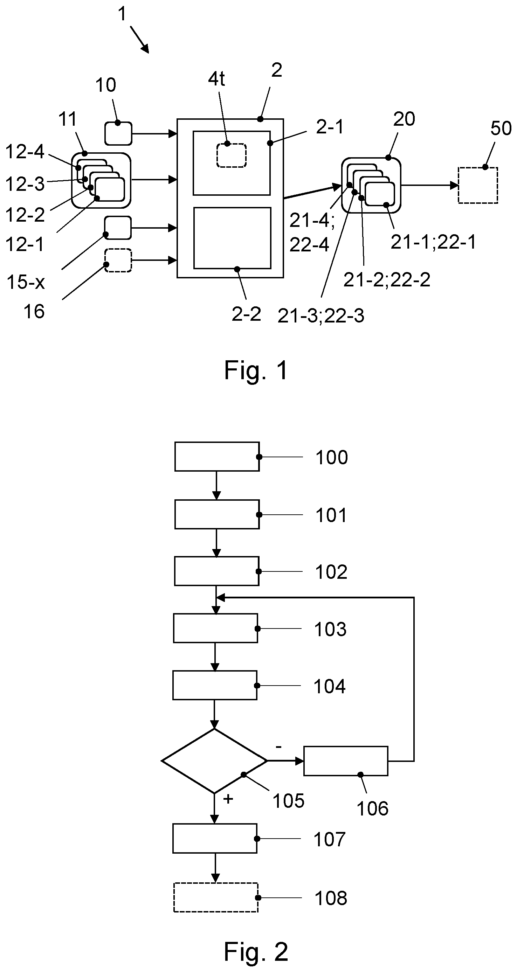

Die Fig. 1 zeigt eine schematische Darstellung einer Ausführungsform des Systems 1 zum Bereitstellen eines Messplans 20 mit mindestens einer Messanordnung 21-x für eine Röntgenuntersuchungsvorrichtung 50. Das Verfahren wird nachfolgend anhand des Systems 1 näher beschrieben.

Das System 1 umfasst eine Datenverarbeitungseinrichtung 2. Die Datenverarbeitungseinrichtung 2 umfasst beispielsweise eine Recheneinrichtung 2-1 und einen Speicher 2-2. Die Datenverarbeitungseinrichtung 2 ist dazu eingerichtet, die folgenden Schritte auszuführen:
- Erhalten von dreidimensionalen Modelldaten 10 eines zu untersuchenden Werkstücks,
- Erhalten eines Untersuchungsplans 11, wobei der Untersuchungsplan 11 mindestens eine Messaufgabe 12-x zum Untersuchen des Werkstücks beinhaltet,
- Erzeugen eines Messplans 20, wobei der Messplan 20 mindestens eine Messanordnung 21-x der Röntgenuntersuchungsvorrichtung 50 zum Durchführen der mindestens einen Messaufgabe 12-x des Untersuchungsplans 11 umfasst.

Der Messplan kann beispielsweise mehrere Messanordnungen 21-x umfassen, wobei jede der Messanordnungen 21-x insbesondere eine Position und eine Orientierung der Röntgenquelle, des Röntgendetektors und des Werkstücks als Messobjekt umfasst. Über die vorgenannten Größen und/oder mittels anderer geeigneter Größen wird insbesondere in jeder Messanordnung 21-x eine Projektionsrichtung festgelegt. Insbesondere umfasst jede Messanordnung 21-1 Parameterwerte für jeden Bewegungsfreiheitsgrad der Röntgenuntersuchungsvorrichtung 50 (insbesondere für die Röntgenquelle, den Röntgendetektor und eine Halterung des Werkstücks). Ferner umfasst jede Messanordnung 21-1 insbesondere Eigenschaften der Röntgenuntersuchungsvorrichtung 50, insbesondere Parameterwerte für (Betriebs-)Parameter der Röntgenuntersuchungsvorrichtung 50, insbesondere Betriebsparameter der Röntgenquelle und des Röntgendetektors.

Ferner ist die Datenverarbeitungseinrichtung 2 dazu eingerichtet, die folgenden Schritte auszuführen:
a) Simulieren eines in der mindestens einen Messanordnung 21-x erzeugten Durchstrahlungsbildes des Werkstücks unter Berücksichtigung der dreidimensionalen Modelldaten 10 des zu untersuchenden Werkstücks;
b) Bestimmen mindestens einer vorgegebenen Eigenschaft des simulierten Durchstrahlungsbildes;
c) Optimieren des Messplans 20 durch Verändern der mindestens einen Messanordnung 21-x und Wiederholen von a) bis c), solange bis die vorgegebene mindestens eine Eigenschaft mindestens ein vorgegebenes Optimierungskriterium 15-x erfüllt;

Der optimierte Messplan 20 wird von der Datenverarbeitungseinrichtung 2 bereitgestellt, insbesondere ausgegeben, beispielsweise in Form eines digitalen Datenpakets. Der optimierte Messplan 20 wird insbesondere der Röntgenuntersuchungsvorrichtung 50 zugeführt, insbesondere in einen Speicher der Röntgenuntersuchungsvorrichtung 50 geladen. Die Röntgenuntersuchungsvorrichtung 50 kann den Messplan 20 anschließend durchführen.

Die Fig. 2 zeigt ein schematisches Ablaufdiagramm einer Ausführungsform des Verfahrens zum Bereitstellen eines Messplans mit mindestens einer Messanordnung für eine Röntgenuntersuchungsvorrichtung.

In einem Verfahrensschritt 100 werden dreidimensionale Modelldaten eines zu untersuchenden Werkstücks, sowie insbesondere einer Röntgenquelle, einer Halterung des Werkstücks sowie eines Röntgendetektors erhalten. Die dreidimensionalen Modelldaten umfassen insbesondere eine geometrische Beschreibung des Werkstücks inklusive für die Durchstrahlung mittels Röntgenstrahlung relevanter Materialeigenschaften (Materialparameter) des Werkstücks, sowie insbesondere selbiges für die Halterung und eine geometrische Beschreibung für die Röntgenquelle, den Röntgendetektor und deren Halterungen.

In einem Verfahrensschritt 101 wird ein Untersuchungsplan erhalten, wobei der Untersuchungsplan mindestens eine Messaufgabe zum Untersuchen des Werkstücks beinhaltet. Die mindestens eine Messaufgabe umfasst insbesondere eine Beschreibung mindestens einer Interessensregion des Werkstücks, die erfasst und untersucht werden soll. Der Untersuchungsplan kann insbesondere auch mehrere Messaufgaben umfassen.

In einem Verfahrensschritt 102 wird ein Messplan erzeugt, wobei der Messplan mindestens eine Messanordnung der Röntgenuntersuchungsvorrichtung zum Durchführen der mindestens einen Messaufgabe des Untersuchungsplans umfasst. Die mindestens eine Messanordnung umfasst hierbei insbesondere jeweilige Positionen und Orientierungen einer Röntgenquelle und eines Röntgendetektors der Röntgenuntersuchungsvorrichtung sowie des Werkstücks. Ferner umfasst die mindestens eine Messanordnung Parameterwerte für (Betriebs-)Parameter der Röntgenuntersuchungsvorrichtung, insbesondere (Betriebs-)Parameter für die Röntgenquelle und den Röntgendetektor. Sind mehrere Messaufgaben vorgesehen, so umfasst der Messplan insbesondere für jede der Messaufgaben eine Messanordnung. Im einfachsten Fall wird für jede Messaufgabe irgendeine Messanordnung gewählt, in der die jeweils in der Messaufgabe vorgegebene Interessensregion auf den Röntgendetektor abgebildet wird.

In einem Verfahrensschritt 103 wird ein in der mindestens einen Messanordnung erzeugtes Durchstrahlungsbild des Werkstücks unter Berücksichtigung der dreidimensionalen Modelldaten des zu untersuchenden Werkstücks und insbesondere der Halterung simuliert. Hierbei werden als Teil der Messanordnung insbesondere auch Eigenschaften der Röntgenuntersuchungsvorrichtung berücksichtigt. Insbesondere wird für jede Messanordnung in dem Messplan ein jeweiliges Durchstrahlungsbild simuliert. Sind mehrere Messaufgaben bzw. zugehörige Messanordnungen vorgesehen, so steht anschließend ein Satz an simulierten Durchstrahlungsbildern zur Verfügung.

In einem Verfahrensschritt 104 wird mindestens eine vorgegebene Eigenschaft des simulierten Durchstrahlungsbildes bestimmt. Bei mehreren Durchstrahlungsbildern wird die mindestens eine vorgegebene Eigenschaft für jedes der simulierten Durchstrahlungsbilder in dem Satz bestimmt. Es kann auch vorgesehen sein, dass hierbei für die jeweiligen Durchstrahlungsbilder unterschiedliche Eigenschaften vorgesehen sind und bestimmt werden. Es kann vorgesehen sein, dass die mindestens eine Eigenschaft in der jeweiligen Messaufgabe vorgegeben ist und/oder ausgehend von der jeweiligen Messaufgabe festgelegt wird.

In einem Verfahrensschritt 105 wird überprüft, ob die bestimmte mindestens eine Eigenschaft mindestens ein vorgegebenes Optimierungskriterium erfüllt. Ist dies nicht der Fall, so wird die mindestens eine Messanordnung in einem Verfahrensschritt 106 verändert, beispielsweise indem eine Position und/oder Orientierung der Röntgenquelle, des Werkstücks und/oder des Röntgendetektors verändert wird und/oder indem die Werte der (Betriebs-)Parameter verändert werden. Anschließend wird zu Verfahrensschritt 103 gesprungen. Ergibt das Überprüfen in Verfahrensschritt 105 hingegen, dass das mindestens eine vorgegebene Optimierungskriterium erfüllt ist, so wird zu Verfahrensschritt 107 gesprungen.

Die Verfahrensschritte 105 und 106 werden für die einzelnen Messanordnungen jeweils separat und insbesondere unabhängig voneinander ausgeführt, das heißt, jede Messanordnung wird einzeln optimiert.

In Verfahrensschritt 107 wird der optimierte Messplan bereitgestellt. Der optimierte Messplan kann im Rahmen des Bereitstellens beispielsweise einer Röntgenuntersuchungsvorrichtung zugeführt werden, beispielsweise in einen Speicher der Röntgenuntersuchungsvorrichtung hineingeladen werden.

In einem Verfahrensschritt 108 kann vorgesehen sein, dass die Röntgenuntersuchungsvorrichtung den optimierten Messplan durchführt.

Es kann vorgesehen sein, dass der Messplan 20 (Fig. 1) zu jeder Messanordnung 21-x Messparameter 22-x aufweist, wobei die Messparameter 22-x Betriebsparameter der Röntgenuntersuchungsvorrichtung 50 umfassen und wobei die Messparameter in c) zum Optimieren verändert werden. Insbesondere kann beispielsweise eine Beschleunigungsspannung einer Röntgenquelle und/oder eine Empfindlichkeit und/oder eine Belichtungszeit des Röntgendetektors eingestellt bzw. verändert werden.

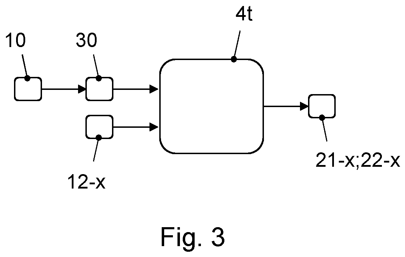

Es kann vorgesehen sein, dass das Erzeugen des Messplans 20 mittels eines trainierten Maschinenlernverfahrens 4t erfolgt. Das trainierte Maschinenlernverfahren 4t wird mittels der Datenverarbeitungseinrichtung 2 bereitgestellt und ausgeführt. Dies ist schematisch in der Fig. 3 gezeigt. Insbesondere wird ausgehend von den dreidimensionalen Modelldaten 10 eine Beschreibung eines dreidimensionalen Objektvolumens 30 des Werkstücks erzeugt. Das dreidimensionale Objektvolumen 30 wird dem trainierten Maschinenlernmodell 4t zusammen mit einer Messaufgabe 12-x als Eingangsdaten zugeführt. Das dreidimensionale Objektvolumen 30 umfasst insbesondere eine Beschreibung von volumetrischen Regionen (z.B. in Form von Voxeln), welche innerhalb und außerhalb des Werkstücks liegen, jeweils mit zugehörigen Materialeigenschaften (Materialparametern). Insbesondere ist basierend auf der Messaufgabe 12-x innerhalb des dreidimensionalen Objektvolumens eine Interessensregion markiert, das heißt, eine Region, die gemäß Messaufgabe 12-x untersucht werden soll. Das trainierte Maschinenlernmodell 4t ermittelt ausgehend von diesen Eingangsdaten als Ausgangsdaten eine Messanordnung 21-x (z.B. eine Messposition, eine Messausrichtung und/oder eine Projektionsrichtung usw.), um die Interessensregion mittels der Röntgenuntersuchungsvorrichtung zu erfassen. Das Ermitteln einer Messanordnung 21-x wird zu jeder vorgegebenen Messaufgabe 12-x (jeweils einzeln) durchgeführt. Der auf diese Weise erzeugte Messplan 20 bildet insbesondere einen initialen Messplan 20, der anschließend wie beschrieben optimiert wird. Sind Messparameter 22-x vorgesehen, so schätzt das trainierte Maschinenlernmodell 4t auch die jeweiligen Messparameter 22-x.

Es kann vorgesehen sein, dass das simulierte Durchstrahlungsbild mittels mindestens einer Filterfunktion gefiltert wird, wobei die vorgegebene mindestens eine Eigenschaft ausgehend von dem gefilterten Durchstrahlungsbild bestimmt wird. Beispielsweise kann eine oder mehrere der folgenden Filterfunktionen verwendet werden: ein Kantenfilter, ein Kontrastfilter, ein Frequenzfilter, ein Fourierfilter, ein Faltungsfilter, ein Waveletfilter usw.

Es kann vorgesehen sein, dass das mindestens eine Optimierungskriterium 15-x (Fig. 1) eine Maximierung eines Kontrastverhältnisses umfasst. Die zugehörige Eigenschaft des Durchstrahlungsbildes ist entsprechend ein Kontrastverhältnis.

Es kann vorgesehen sein, dass das mindestens eine Optimierungskriterium 15-x eine Maximierung eines Signal-zu-Rausch-Verhältnisses umfasst. Die zugehörige Eigenschaft des Durchstrahlungsbildes ist entsprechend ein Signal-zu-Rausch-Verhältnis.

Es kann vorgesehen sein, dass das mindestens eine Optimierungskriterium 15-x eine Vorgabe für ein Histogramm des simulierten Durchstrahlungsbildes umfasst. Die zugehörige Eigenschaft des Durchstrahlungsbildes ist entsprechend ein Histogramm.

Es kann vorgesehen sein, dass zusätzlich mindestens eine Vorgabe in Bezug auf eine Durchstrahlungslänge berücksichtigt wird. Beispielsweise kann die Vorgabe vorsehen, dass eine Durchstrahlungslänge auf eine maximale (effektive) Durchstrahlungslänge begrenzt wird oder begrenzt ist.

Es kann weiterbildend vorgesehen sein, dass die Vorgabe einen vorgegebenen Bereich, in dem die Durchstrahlungslängen liegen müssen, beinhaltet. Infolge dieser Vorgabe wird die Messanordnung dann derart verändert, beispielsweise, indem eine Position und/oder Orientierung des Werkstücks verändert wird, dass die Durchstrahlungslängen in dem vorgegebenen Bereich liegen. Es gilt zum Erfassen Durchstrahlbilder insbesondere eine Position und/oder Orientierung zu finden, in der nicht gleichzeitig sehr dünne und sehr dicke Materialstärken durchstrahlt werden. In diesem Fall droht ein Informationsverlust, da in den dünnen Bereichen insbesondere eine Überbelichtung und in den dicken Bereichen insbesondere eine Unterbelichtung erfolgt. Daher ist anzustreben, dass die (effektiven) Materialstärken (= (effektiven) Durchstrahlungslängen) einigermaßen gleich sind, also innerhalb des vorgegebenen Bereichs liegen. Die Durchstrahlungslängen können hierbei insbesondere auch indirekt berücksichtigt werden, beispielsweise über eine Anzahl von Counts (bzw. eine Intensität) des Röntgendetektors bei verschiedenen Bildelementen.

Es kann vorgesehen sein, dass zusätzlich eine Anzahl von Messanordnungen 21-x des Messplans 20 zum Durchführen der mindestens einen Messaufgabe 12-x minimiert wird. Dies kann insbesondere erfolgen, indem Messaufgaben 12-x zusammengelegt und zusammen ausgeführt werden, beispielsweise weil jeweilige Interessensregionen gemeinsam in einem einzigen Durchstrahlungsbild enthalten sein können.

Es kann vorgesehen sein, dass zusätzlich eine Reihenfolge der Messanordnungen 21-x des Messplans 20 derart gewählt und/oder verändert wird, dass eine benötigte Zeit zum Durchführen des Messplans 20 minimiert ist oder minimiert wird. Dies kann insbesondere durch Wahl bzw. Ändern der Reihenfolge der Messanordnungen 21-x erfolgen, wobei sowohl eine Messzeit (für das Erfassen eines Durchstrahlungsbildes zugehörig zu einer Messanordnung 21-x) als auch eine Verfahrzeit (Zeit, die die Röntgenuntersuchungsvorrichtung 50 benötigt, um von einer Messanordnung 21-x zur nächsten Messanordnung 21-x zu gelangen). Hierbei können insbesondere auch Restschwingzeiten berücksichtigt werden, also eine Zeit, die die Röntgenuntersuchungsvorrichtung 50 nach dem Verfahren jeweils benötigt, um (vollständig) auszuschwingen.

Es kann vorgesehen sein, dass mehrere Optimierungskriterien 15-x vorgesehen sind, wobei das Optimieren anhand einer gewichteten Summe der mehreren Optimierungskriterien 15-x erfolgt. Jeweilige Gewichtungsfaktoren können hierbei beispielsweise im Rahmen jeder Messaufgabe 12-x vorgegeben werden oder für alle Messaufgaben 12-x gemeinsam vorgegeben sein.

Es kann vorgesehen sein, dass um das Werkstück herum ein Hüllvolumen 16 (Fig. 1) festgelegt wird, wobei das Hüllvolumen 16 beim Erzeugen und Optimieren des Messplans 20 berücksichtigt wird. Das Hüllvolumen 16 kann auch als Teil der dreidimensionalen Modelldaten 10 vorgegeben werden oder vorgegeben sein. Insbesondere wird das Hüllvolumen 16 zur Kollisionsvermeidung berücksichtigt, wie voranstehend bereits beschrieben wurde.

Es kann vorgesehen sein, dass eine zum Halten des Werkstücks eingesetzte Werkstückaufnahme und/oder Halterung berücksichtigt wird. Insbesondere kann dies durch Berücksichtigung in den dreidimensionalen Modelldaten 10 erfolgen, beispielsweise indem Volumendaten für die Werkstückaufnahme und/oder Halterung mit zugehörigen Materialeigenschaften erzeugt und beim Erzeugen und Optimieren des Messplans 20 berücksichtigt werden.

Es kann beispielsweise vorgesehen sein, dass ausgehend von drei vorgegebenen Messaufgaben 12-x mit jeweils vorgegebenen Interessensregionen als Messplan 20 drei Messanordnungen 21-x (und insbesondere zugehörige Messparameter 22-x) bereitgestellt werden, wobei die Röntgenquelle und der Röntgendetektor der Röntgenuntersuchungsvorrichtung beispielhaft in jeweils einem Freiheitsgrad bewegt werden können, insbesondere auf einer Linearachse, um hierdurch einen jeweiligen Abstand zum Werkstück (Messobjekt) zu verändern. Das Werkstück (Messobjekt) soll beispielhaft in sechs Freiheitsgraden (drei translatorische und drei rotatorische) angeordnet werden können. Es ergibt sich dann beispielsweise der folgende schematische Messplan 20:
1) Messaufgabe 12-1: Messanordnung 21-1:
   - Röntgenquelle: Position x_s_1 auf Linearachse
   - Röntgendetektor: Position x_d_1 auf Linearachse
   - Werkstück: Position (x_o_1, y_o_1, z_o_1, Rollwinkel_1, Nickwinkel_1, Gierwinkel_1)
   - Messparameter 22-1: Beschleunigungsspannung: U1, Belichtungszeit: T1
2) Messaufgabe 12-2: Messanordnung 21-2:
   - Röntgenquelle: Position x_s_2 auf Linearachse
   - Röntgendetektor: Position x_d_2 auf Linearachse
   - Werkstück: Position (x_o_2, y_o_2, z_o_2, Rollwinkel_2, Nickwinkel_2, Gierwinkel_2)
   - Messparameter 22-2: Beschleunigungsspannung: U2, Belichtungszeit: T2
3) Messaufgabe 12-3: Messanordnung 21-3:
   - Röntgenquelle: Position x_s_3 auf Linearachse
   - Röntgendetektor: Position x_d_3 auf Linearachse
   - Werkstück: Position (x_o_3, y_o_3, z_o_3, Rollwinkel_3, Nickwinkel_3, Gierwinkel_3)
   - Messparameter 22-3: Beschleunigungsspannung: U3, Belichtungszeit: T3

Nach Durchführen des Messplans 20 stehen drei vom Werkstück (Messobjekt) in den jeweiligen Messanordnungen 21-x erfasste Durchstrahlungsbilder zur Verfügung, welche in an sich bekannter Weise zum Überprüfen des Werkstücks ausgewertet werden können.

### Bezugszeichenliste

- 1: System
- 2: Datenverarbeitungseinrichtung
- 2-1: Recheneinrichtung
- 2-2: Speicher
- 4: Maschinenlernmodell
- 4t: trainiertes Maschinenlernmodell
- 10: dreidimensionale Modelldaten
- 11: Untersuchungsplan
- 12-x: Messaufgabe
- 15-x: Optimierungskriterium
- 16: Hüllvolumen
- 20: Messplan
- 21-x: Messanordnung
- 22-x: Messparameter
- 30: dreidimensionales Objektvolumen
- 50: Röntgenuntersuchungsvorrichtung
- 100-108: Verfahrensschritte

## Patentansprüche

1. Verfahren zum Bereitstellen eines Messplans (20) mit mindestens einer Messanordnung (21-x) für eine Röntgenuntersuchungsvorrichtung (50), umfassend:
Erhalten von dreidimensionalen Modelldaten (10) eines zu untersuchenden Werkstücks,
Erhalten eines Untersuchungsplans (11), wobei der Untersuchungsplan (11) mindestens eine Messaufgabe (12-x) zum Untersuchen des Werkstücks beinhaltet,
Erzeugen eines Messplans (20), wobei der Messplan (20) mindestens eine Messanordnung (21-x) der Röntgenuntersuchungsvorrichtung zum Durchführen der mindestens einen Messaufgabe (12-x) des Untersuchungsplans (11) umfasst,
a) Simulieren eines in der mindestens einen Messanordnung (21-x) erzeugten Durchstrahlungsbildes des Werkstücks unter Berücksichtigung der dreidimensionalen Modelldaten (10) des zu untersuchenden Werkstücks,
b) Bestimmen mindestens einer vorgegebenen Eigenschaft des simulierten Durchstrahlungsbildes,
c) Optimieren des Messplans (20) durch Verändern der mindestens einen Messanordnung (21-x) und Wiederholen von a) bis c), solange bis die vorgegebene mindestens eine Eigenschaft mindestens ein vorgegebenes Optimierungskriterium (15-x) erfüllt; und
Bereitstellen des optimierten Messplans (20).

2. Verfahren nach Anspruch 1, **dadurch gekennzeichnet, dass** der Messplan (20) zu jeder Messanordnung (21-x) Messparameter (22-x) aufweist, wobei die Messparameter (22-x) Betriebsparameter der Röntgenuntersuchungsvorrichtung (50) umfassen und wobei die Messparameter (22-x) in c) zum Optimieren verändert werden.

3. Verfahren nach Anspruch 1 oder 2, **dadurch gekennzeichnet, dass** das Erzeugen des Messplans (20) mittels eines trainierten Maschinenlernverfahrens (4t) erfolgt.

4. Verfahren nach einem der vorangegangenen Ansprüche, **dadurch gekennzeichnet, dass** das simulierte Durchstrahlungsbild mittels mindestens einer Filterfunktion gefiltert wird, wobei die vorgegebene mindestens eine Eigenschaft ausgehend von dem gefilterten Durchstrahlungsbild bestimmt wird.

5. Verfahren nach einem der vorangegangenen Ansprüche, **dadurch gekennzeichnet, dass** das mindestens eine Optimierungskriterium (15-x) eine Maximierung eines Kontrastverhältnisses umfasst.

6. Verfahren nach einem der vorangegangenen Ansprüche, **dadurch gekennzeichnet, dass** das mindestens eine Optimierungskriterium (15-x) eine Maximierung eines Signal-zu-Rausch-Verhältnisses umfasst.

7. Verfahren nach einem der vorangegangenen Ansprüche, **dadurch gekennzeichnet, dass** das mindestens eine Optimierungskriterium (15-x) eine Vorgabe für ein Histogramm des simulierten Durchstrahlungsbildes umfasst.

8. Verfahren nach einem der vorangegangenen Ansprüche, **dadurch gekennzeichnet, dass** zusätzlich mindestens eine Vorgabe in Bezug auf eine Durchstrahlungslänge berücksichtigt wird.

9. Verfahren nach Anspruch 8, **dadurch gekennzeichnet, dass** die Vorgabe einen vorgegebenen Bereich, in dem die Durchstrahlungslängen liegen müssen, beinhaltet.

10. Verfahren nach einem der vorangegangenen Ansprüche, **dadurch gekennzeichnet, dass** zusätzlich eine Anzahl von Messanordnungen (21-x) des Messplans (20) zum Durchführen der mindestens einen Messaufgabe (12-x) minimiert wird.

11. Verfahren nach einem der vorangegangenen Ansprüche, **dadurch gekennzeichnet, dass** zusätzlich eine Reihenfolge der Messanordnungen (21-x) des Messplans (20) derart gewählt und/oder verändert wird, dass eine benötigte Zeit zum Durchführen des Messplans (20) minimiert ist oder minimiert wird.

12. Verfahren nach einem der vorangegangenen Ansprüche, **dadurch gekennzeichnet, dass** mehrere Optimierungskriterien (15-x) vorgesehen sind, wobei das Optimieren anhand einer gewichteten Summe der mehreren Optimierungskriterien (15-x) erfolgt.

13. Verfahren nach einem der vorangegangenen Ansprüche, **dadurch gekennzeichnet, dass** um das Werkstück herum ein Hüllvolumen (16) festgelegt wird, wobei das Hüllvolumen (16) beim Erzeugen und Optimieren des Messplans (20) berücksichtigt wird.

14. Verfahren nach einem der vorangegangenen Ansprüche, **dadurch gekennzeichnet, dass** eine zum Halten des Werkstücks eingesetzte Werkstückaufnahme und/oder Halterung berücksichtigt wird.

15. System (1) zum Bereitstellen eines Messplans (20) mit mindestens einer Messanordnung (21-x) für eine Röntgenuntersuchungsvorrichtung (50), umfassend:
eine Datenverarbeitungseinrichtung (2), wobei die Datenverarbeitungseinrichtung (2) dazu eingerichtet ist, die folgenden Schritte auszuführen:
Erhalten von dreidimensionalen Modelldaten (10) eines zu untersuchenden Werkstücks,
Erhalten eines Untersuchungsplans (11), wobei der Untersuchungsplan (11) mindestens eine Messaufgabe (12-x) zum Untersuchen des Werkstücks beinhaltet,
Erzeugen eines Messplans (20), wobei der Messplan (20) mindestens eine Messanordnung (21-x) der Röntgenuntersuchungsvorrichtung (50) zum Durchführen der mindestens einen Messaufgabe (12-x) des Untersuchungsplans (11) umfasst,
a) Simulieren eines in der mindestens einen Messanordnung (21-x) erzeugten Durchstrahlungsbildes des Werkstücks unter Berücksichtigung der dreidimensionalen Modelldaten (10) des zu untersuchenden Werkstücks,
b) Bestimmen mindestens einer vorgegebenen Eigenschaft des simulierten Durchstrahlungsbildes,
c) Optimieren des Messplans (20) durch Verändern der mindestens einen Messanordnung (21-x) und Wiederholen von a) bis c), solange bis die vorgegebene mindestens eine Eigenschaft mindestens ein vorgegebenes Optimierungskriterium (15-x) erfüllt; und
Bereitstellen des optimierten Messplans (20).

## Geänderte Patentansprüche

### Geänderte Patentansprüche gemäss Regel 137(2) EPÜ.

1. Computerimplementiertes Verfahren zum Bereitstellen eines Messplans (20) für die zweidimensionale Röntgenuntersuchung mit mindestens einer Messanordnung (21-x) für eine Röntgenuntersuchungsvorrichtung (50), umfassend:
Erhalten von dreidimensionalen Modelldaten (10) eines zu untersuchenden Werkstücks,
Erhalten eines Untersuchungsplans (11), wobei der Untersuchungsplan (11) mindestens eine Messaufgabe (12-x) an einem erfassten Durchstrahlungsbild zum Untersuchen des Werkstücks beinhaltet,
Erzeugen eines Messplans (20), wobei der Messplan (20) mindestens eine Messanordnung (21-x) der Röntgenuntersuchungsvorrichtung zum Durchführen der mindestens einen Messaufgabe (12-x) des Untersuchungsplans (11) umfasst,
a) Simulieren eines in der mindestens einen Messanordnung (21-x) erzeugten Durchstrahlungsbildes des Werkstücks unter Berücksichtigung der dreidimensionalen Modelldaten (10) des zu untersuchenden Werkstücks,
b) Bestimmen mindestens einer vorgegebenen Eigenschaft des simulierten Durchstrahlungsbildes,
c) Optimieren des Messplans (20) durch Verändern der mindestens einen Messanordnung (21-x) und Wiederholen von a) bis c), solange bis die vorgegebene mindestens eine Eigenschaft mindestens ein vorgegebenes Optimierungskriterium (15-x) erfüllt; und
Bereitstellen des optimierten Messplans (20).

2. Verfahren nach Anspruch 1, **dadurch gekennzeichnet, dass** der Messplan (20) zu jeder Messanordnung (21-x) Messparameter (22-x) aufweist, wobei die Messparameter (22-x) Betriebsparameter der
Röntgenuntersuchungsvorrichtung (50) umfassen und wobei die Messparameter (22-x) in c) zum Optimieren verändert werden.

3. Verfahren nach Anspruch 1 oder 2, **dadurch gekennzeichnet, dass** das Erzeugen des Messplans (20) mittels eines trainierten Maschinenlernverfahrens (4t) erfolgt.

4. Verfahren nach einem der vorangegangenen Ansprüche, **dadurch gekennzeichnet, dass** das simulierte Durchstrahlungsbild mittels mindestens einer Filterfunktion gefiltert wird, wobei die vorgegebene mindestens eine Eigenschaft ausgehend von dem gefilterten Durchstrahlungsbild bestimmt wird.

5. Verfahren nach einem der vorangegangenen Ansprüche, **dadurch gekennzeichnet, dass** das mindestens eine Optimierungskriterium (15-x) eine Maximierung eines Kontrastverhältnisses umfasst.

6. Verfahren nach einem der vorangegangenen Ansprüche, **dadurch gekennzeichnet, dass** das mindestens eine Optimierungskriterium (15-x) eine Maximierung eines Signal-zu-Rausch-Verhältnisses umfasst.

7. Verfahren nach einem der vorangegangenen Ansprüche, **dadurch gekennzeichnet, dass** das mindestens eine Optimierungskriterium (15-x) eine Vorgabe für ein Histogramm des simulierten Durchstrahlungsbildes umfasst.

8. Verfahren nach einem der vorangegangenen Ansprüche, **dadurch gekennzeichnet, dass** zusätzlich mindestens eine Vorgabe in Bezug auf eine Durchstrahlungslänge berücksichtigt wird.

9. Verfahren nach Anspruch 8, **dadurch gekennzeichnet, dass** die Vorgabe einen vorgegebenen Bereich, in dem die Durchstrahlungslängen liegen müssen, beinhaltet.

10. Verfahren nach einem der vorangegangenen Ansprüche, **dadurch gekennzeichnet, dass** zusätzlich eine Anzahl von Messanordnungen (21-x) des Messplans (20) zum Durchführen der mindestens einen Messaufgabe (12-x) minimiert wird.

11. Verfahren nach einem der vorangegangenen Ansprüche, **dadurch gekennzeichnet, dass** zusätzlich eine Reihenfolge der Messanordnungen (21-x) des Messplans (20) derart gewählt und/oder verändert wird, dass eine benötigte Zeit zum Durchführen des Messplans (20) minimiert ist oder minimiert wird.

12. Verfahren nach einem der vorangegangenen Ansprüche, **dadurch gekennzeichnet, dass** mehrere Optimierungskriterien (15-x) vorgesehen sind, wobei das Optimieren anhand einer gewichteten Summe der mehreren Optimierungskriterien (15-x) erfolgt.

13. Verfahren nach einem der vorangegangenen Ansprüche, **dadurch gekennzeichnet, dass** um das Werkstück herum ein Hüllvolumen (16) festgelegt wird, wobei das Hüllvolumen (16) beim Erzeugen und Optimieren des Messplans (20) berücksichtigt wird.

14. Verfahren nach einem der vorangegangenen Ansprüche, **dadurch gekennzeichnet, dass** eine zum Halten des Werkstücks eingesetzte Werkstückaufnahme und/oder Halterung berücksichtigt wird.

15. System (1) zum Bereitstellen eines Messplans (20) für die zweidimensionale Röntgenuntersuchung mit mindestens einer Messanordnung (21-x) für eine Röntgenuntersuchungsvorrichtung (50), umfassend:
eine Datenverarbeitungseinrichtung (2), wobei die Datenverarbeitungseinrichtung (2) dazu eingerichtet ist, die folgenden Schritte auszuführen:
Erhalten von dreidimensionalen Modelldaten (10) eines zu untersuchenden Werkstücks,
Erhalten eines Untersuchungsplans (11), wobei der Untersuchungsplan (11) mindestens eine Messaufgabe (12-x) an einem erfassten Durchstrahlungsbild zum Untersuchen des Werkstücks beinhaltet,
Erzeugen eines Messplans (20), wobei der Messplan (20) mindestens eine Messanordnung (21-x) der Röntgenuntersuchungsvorrichtung (50) zum Durchführen der mindestens einen Messaufgabe (12-x) des Untersuchungsplans (11) umfasst,
a) Simulieren eines in der mindestens einen Messanordnung (21-x) erzeugten Durchstrahlungsbildes des Werkstücks unter Berücksichtigung der dreidimensionalen Modelldaten (10) des zu untersuchenden Werkstücks,
b) Bestimmen mindestens einer vorgegebenen Eigenschaft des simulierten Durchstrahlungsbildes,
c) Optimieren des Messplans (20) durch Verändern der mindestens einen Messanordnung (21-x) und Wiederholen von a) bis c), solange bis die vorgegebene mindestens eine Eigenschaft mindestens ein vorgegebenes Optimierungskriterium (15-x) erfüllt; und
Bereitstellen des optimierten Messplans (20).
